# EUROPÄISCHE PATENTANMELDUNG

(11) **EP 2 521 357 A1**
(43) Veröffentlichungstag der Anmeldung: **07.11.2012**
(21) Anmeldenummer: 11165099.0
(22) Anmeldetag: 06.05.2011
(51) Int. Cl.: H04N 7/26

(54) **Verfahren und Vorrichtung zur Filterung von kodierten Bildpartitionen**

(71) Anmelder: SIEMENS AKTIENGESELLSCHAFT, 80333 München (DE)
(72) Erfinder: Amon, Peter, 81675, München (DE)

(57) **Zusammenfassung**

Die Erfindung beschreibt ein Verfahren zur Codierung einer Folge digitalisierter Bilder (I) aus einer Vielzahl von Pixeln. Dabei wird für die jeweiligen Bilder ein von deren Bildinhalt abhängiges Signal (S) codiert, wobei im Rahmen der Codierung eine Rekonstruktion des uncodierten Signals durchgeführt wird und daraus rekonstruierte Bilder abgeleitet werden. Die rekonstruierten Bilder (RI) werden einer Filterung (LF) unterzogen, bei der ein jeweiliges rekonstruiertes Bild (RI) in Partitionen (PA1, PA2) aufgeteilt wird und für jede Partition (PA1, PA2) ein oder mehrere Filterparameter (FP) festgelegt werden. Erfindungsgemäß werden zumindest einige der Partitionen (PI1, PI2) jeweils durch einen oder mehrere Parameter einer Funktion (F1, F2, F3) beschrieben, welche den Verlauf von Pixeln innerhalb eines vorbestimmten Bildbereichs (B) beschreibt, wobei der Verlauf von Pixeln den vorbestimmten Bildbereich in zumindest zwei Partitionen (PA1, PA2) aufteilt.

## Beschreibung

Die Erfindung betrifft ein Verfahren zur Codierung einer Folge digitalisierter Bilder sowie ein entsprechendes Decodierverfahren. Darüber hinaus betrifft die Erfindung eine Codiervorrichtung und eine Decodiervorrichtung zur Durchführung des Codier- bzw. Decodierverfahrens.

Die Erfindung liegt auf dem Gebiet der Videocodierung. Dabei werden mit entsprechenden Kompressionsverfahren die Inhalte von zeitlich aufeinander folgenden digitalen Bildern aus einer Vielzahl von Pixeln komprimiert, wobei in der Regel Ähnlichkeiten zwischen zeitlich benachbarten Bildern geeignet berücksichtigt werden, um die Größe des komprimierten Bildstroms zu verkleinern.

Zur Verbesserung der Bildqualität eines codierten Bildstroms nach dessen Codierung sind aus dem Stand der Technik verschiedene Filterverfahren bekannt. Dabei werden bereits codierte Bilder des Bildstroms wieder rekonstruiert und darauf eine entsprechende Filterung angewandt, welche analog bei der Decodierung eingesetzt wird. In heutigen Codierverfahren kommen insbesondere Deblocking-Filter und Wiener-Filter zum Einsatz. Bei der Deblocking-Filterung werden durch die Komprimierung erzeugte Artefakte an Grenzen von codierten Bildblöcken vermindert. Bei der Wiener-Filterung erfolgt ein Vergleich der rekonstruierten Bilder mit den ursprünglichen Bildern und es werden entsprechende Filterkoeffizienten derart bestimmt, dass der mittlere quadratische Fehler zwischen rekonstruiertem und ursprünglichem Bild minimiert wird.

Moderne Codierverfahren enthalten eine Prädiktionsschleife, in der aus einem oder mehreren zeitlich vorhergehenden rekonstruierten Bildern das zeitlich nächste Bild über entsprechende Bewegungsschätzung prädiziert wird. Dabei wird der Prädiktionsfehler zwischen dem zu codierenden Bild und dem prädizierten Bild als Signal codiert. Häufig werden die oben erwähnten Filter innerhalb der Prädiktionsschleife eingesetzt. In diesem Fall bezeichnet man diese Filter auch als Loop-Filter.

Aus dem Stand der Technik ist es bekannt, eine sog. adaptive Loop-Filterung einzusetzen, bei der nur bestimmte Bildbereiche des Bildes einer Filterung unterzogen werden. In der Druckschrift [1] wird hierzu ein Bildblock in immer kleinere Bildblöcke unterteilt, indem zunächst der ursprüngliche Bildblock in vier kleinere gleich große Bildblöcke und anschließend hierarchisch die kleineren Bildblöcke in gleicher Weise immer wieder in kleinere Bildblöcke aufgeteilt werden. Für die jeweiligen Bildblöcke wird dabei signalisiert, ob eine Filterung des Bildblocks stattfinden soll oder nicht. Die in der Druckschrift [1] beschriebene Filterung weist den Nachteil auf, dass für jeden einzelnen Block signalisiert werden muss, ob eine Filterung verwendet wird oder nicht, so dass bei einer großen Anzahl von unterteilten Blöcken viele zusätzliche Informationen im codierten Bildstrom übermittelt werden müssen.

Aufgabe der Erfindung ist es, ein Verfahren zur Codierung bzw. Decodierung eines Bildstroms zu schaffen, mit dem eine einfache und flexibel anpassbare Filterung für die Bilder des Bildstroms erreicht wird.

Diese Aufgabe wird durch die unabhängigen Patentansprüche gelöst. Weiterbildungen der Erfindung sind in den abhängigen Ansprüchen definiert.

Das erfindungsgemäße Verfahren dient zur Codierung einer Folge digitalisierter Bilder aus einer Vielzahl von Pixeln, wobei für die jeweiligen Bilder ein von deren Bildinhalt abhängiges Signal codiert wird. Im Rahmen der Codierung wird eine Rekonstruktion des uncodierten Signals durchgeführt und daraus rekonstruierte Bilder abgeleitet, welche vorzugsweise im Rahmen einer zeitlichen Prädiktion bei der Codierung von nachfolgenden Bildern der Folge verwendet werden. Die rekonstruierten Bilder werden einer Filterung unterzogen, bei der ein jeweiliges rekonstruiertes Bild in Partitionen aufgeteilt wird und für jede Partition ein oder mehrere Filterparameter festgelegt werden.

Das erfindungsgemäße Verfahren zeichnet sich dadurch aus, dass zumindest ein Teil der Partitionen jeweils durch einen oder mehrere Parameter einer Funktion beschrieben werden, welche den Verlauf von Pixeln innerhalb eines vorbestimmten Bildbereichs beschreibt, wobei der Verlauf von Pixeln den vorbestimmten Bildbereich in zumindest zwei Partitionen aufteilt. Der vorbestimmte Bildbereich repräsentiert insbesondere die einzelnen, im Rahmen der Codierung separat verarbeiteten Teilbildbereiche in der Form sog. Coding-Units bzw. wiederum Teilbildbereiche dieser Coding-Units.

Das erfindungsgemäße Verfahren beruht auf der Idee, dass über eine entsprechend parametrisierte Funktion verschiedene Pixelverläufe innerhalb eines Bildbereichs beschrieben werden können und hierdurch Partitionen in verschiedenen Formen geschaffen werden können, welchen jeweils geeignete Filterparameter zugewiesen werden. Hierdurch wird eine sehr flexible Codierung der Bilder des Bildstroms erreicht. Das erfindungsgemäße Verfahren kann für beliebige Codierverfahren eingesetzt werden. Insbesondere kann das Verfahren in dem noch in der Entwicklung befindlichen Videocodier-Standard HEVC (HEVC = High Efficiency Video Coding) verwendet werden.

In einer bevorzugten Variante wird die erfindungsgemäße Filterung in einem prädiktiven Videocodierverfahren eingesetzt. Dabei wird als Signal ein Prädiktionsfehler zwischen dem aktuell zu codierenden Bild und einem oder mehreren rekonstruierten und prädizierten Bildern codiert, wobei der Prädiktionsfehler innerhalb einer Prädiktionsschleife aus einem oder mehreren vergangenen rekonstruierten Bildern ermittelt wird, welche einer Bewegungskompensation unter Verwendung von über eine Bewegungsschätzung ermittelten Bewegungsvektoren unterzogen werden. Der Begriff der Rekonstruktion eines uncodierten Bildes betrifft hier und im Folgenden insbesondere die nährungsweise Wiederherstellung des ursprünglichen Bildes aus dem codierten Signal. Eine exakte Rekonstruktion ist aufgrund von durch die Codierung hervorgerufenen Bildverlusten in der Regel nicht möglich. Innerhalb der Prädiktionsschleife werden dabei das oder die rekonstruierten Bilder nach der Bewegungskompensation zur Rekonstruktion von einem oder mehreren nachfolgenden Bildern verwendet. Vorzugsweise kommt dabei die erfindungsgemäße Filterung als Loop-Filterung innerhalb der Prädiktionsschleife vor oder nach der Bewegungskompensation zum Einsatz. Das heißt, die zur Ermittlung des Prädiktionsfehlers verwendeten rekonstruierten Bilder werden innerhalb der Prädiktionsschleife neben der Bewegungskompensation der erfindungsgemäßen Filterung unterzogen. Nichtsdestotrotz besteht auch die Möglichkeit, dass die zur Ermittlung des Prädiktionsfehlers verwendeten rekonstruierten Bilder ungefiltert sind, und die Filterung der rekonstruierten Bilder außerhalb der Prädiktionsschleife stattfindet.

In einer besonders bevorzugten Variante wird zur Codierung ein Verfahren eingesetzt, bei dem das codierte Bild durch eine Transformation und eine Quantisierung erzeugt wird und zur Rekonstruktion des uncodierten Signals eine entsprechende inverse Quantisierung und inverse Transformation auf das codierte Signal angewendet wird, wobei das codierte Signal nach der Quantisierung und Transformation vorzugsweise einer weiteren Entropiecodierung unterzogen wird. Die Entropiecodierung erhöht nochmals die Codiereffizienz, ohne dass dabei weitere Informationen aus dem Bild verloren gehen. Im Rahmen der Decodierung erfolgt dann zunächst eine entsprechende Entropiedecodierung, bevor anschließend die inverse Quantisierung und inverse Transformation auf das codierte Signal angewendet wird.

Im Rahmen der erfindungsgemäßen Filterung können beliebige, aus dem Stand der Technik verwendete Filter verwendet werden. Insbesondere kann das bereits oben erwähnte Wiener-Filter bzw. alternativ oder zusätzlich auch ein Deblocking-Filter zum Einsatz kommen.

In einer weiteren, besonders bevorzugten Ausführungsform sind die jeweiligen vorbestimmten Bildbereiche, die durch den Verlauf von Pixeln in zumindest zwei Partitionen aufgeteilt werden, rechteckige Bildbereiche und vorzugsweise quadratische Bildbereiche in der Form von Bildblöcken. Wie bereits oben erwähnt, sind die Bildbereiche dabei insbesondere entsprechende Coding-Units bzw. Teilbereiche dieser Coding-Units.

Die Funktion, welche den Verlauf von Pixeln innerhalb des vorbestimmten Bildbereichs beschreibt, kann je nach Anwendungsfall beliebig gewählt werden. In einer besonders bevorzugten Ausführungsform wird eine Gerade verwendet. Vorzugsweise verläuft die Gerade dabei schräg in einem entsprechenden rechteckigen Bildbereich, d.h. an den Punkten, an denen die Gerade einen entsprechenden Rand des Bildbereichs schneidet, steht die Gerade nicht senkrecht auf dem Rand des Bildbereichs. Alternativ oder zusätzlich kann der entsprechende Verlauf von Pixeln im vorbestimmten Bildbereich auch durch andere Funktionen beschrieben werden, wie z.B. durch ein Polynom und/oder ein Spline (insbesondere ein B-Spline), das eine stückweise Zusammensetzung von Polynomen darstellt.

Die entsprechenden Filterparameter, welche für die einzelnen Partitionen im Bild festgelegt werden, können beliebig ausgestaltet sein. In einer Variante der Erfindung legen die Filterparameter lediglich fest, ob eine Filterung in der jeweiligen Partition erfolgt oder nicht. Ebenso kann über die Filterparameter auch spezifiziert werden, welche Art von Filter in dem vorbestimmten Bildbereich verwendet wird. Insbesondere können spezifische Filter, wie z.B. das oben beschriebene Wiener-Filter bzw. Deblocking-Filter, oder weitere spezifische Filtertypen oder spezielle Filtereigenschaften für die unterschiedlichen Partitionen festgelegt werden.

In einer weiteren Ausführungsform wird die erfindungsgemäße Unterteilung von Partitionen basierend auf Parametern einer Funktion mit einer hierarchischen Blockunterteilung kombiniert. Das heißt, die jeweiligen vorbestimmten Bildbereiche, welche in zumindest zwei Partitionen aufgeteilt werden, werden über eine hierarchische Unterteilung des entsprechenden Bilds in immer kleinere Bildbereiche erzeugt. Eine hierarchische Bildaufteilung bedeutet dabei, dass basierend auf einer Vorschrift ein Bildbereich in eine vorbestimmte Anzahl von kleineren Bildbereichen unterteilt wird, die analog basierend auf der gleichen Vorschrift wiederum in weitere kleinere Bildbereiche und diese wiederum in entsprechende kleinere Bildbereiche usw. unterteilt werden können. Ein Beispiel einer solchen hierarchischen Blockunterteilung findet sich in der eingangs erwähnten Druckschrift [1], bei der ein Bildblock schrittweise in vier gleich große kleinere Bildblöcke aufgeteilt wird.

In einer weiteren Ausführungsform des erfindungsgemäßen Verfahrens sind der oder die Filterparameter für die jeweiligen Partitionen und/oder der oder die Parameter der Funktion, welche den Verlauf von Pixeln innerhalb der jeweiligen vorbestimmten Bildbereiche beschreibt, innerhalb der codierten Bildfolge enthalten. Alternativ oder zusätzlich besteht auch die Möglichkeit, dass die Filterparameter bzw. die Parameter der entsprechenden Funktion aus einem oder mehreren vorgegebenen Codierparametern abgeleitet werden können. Beispielsweise kann sich die Art der Funktion (linear, polynomial, Spline usw.) aus einem entsprechenden Profil ergeben, welches die Codierung beschreibt.

In einer weiteren, bevorzugten Ausführungsform des erfindungsgemäßen Verfahrens, bei dem eine Prädiktion mit Hilfe von Bewegungsschätzung erfolgt, werden Partitionen, welche im Rahmen der Bewegungsschätzung definiert werden und über jeweilige Bewegungsvektoren verschobene Bildbereiche darstellen, zumindest zum Teil als Partitionen für die Filterung eingesetzt. Insbesondere kann dabei die in der Druckschrift [2] beschriebene Bewegungsschätzung verwendet werden, bei der die verschobenen Partitionen durch die Aufteilung eines Blocks basierend auf den entsprechenden Parametern einer Geraden definiert werden.

Neben dem oben beschriebenen Codierverfahren betrifft die Erfindung ferner ein Verfahren zur Decodierung einer Folge digitalisierter Bilder, welche mit dem erfindungsgemäßen Verfahren codiert wurde, so dass für die jeweiligen Bilder ein von deren Bildinhalt abhängiges codiertes Signal erhalten wird. Im Rahmen der Codierung wird eine Rekonstruktion des uncodierten Signals durchgeführt und daraus rekonstruierte Bilder abgeleitet, welche vorzugsweise bei der Decodierung von nachfolgenden Bildern der Folge verwendet werden. Die rekonstruierten Bilder werden einer Filterung unterzogen, welche der bei der Codierung verwendeten Filterung entspricht, wobei bei der Filterung ein jeweiliges rekonstruiertes Bild in Partitionen aufgeteilt wird und für jede Partition ein oder mehrere Filterparameter festgelegt werden. Genauso wie bei der Codierung werden zumindest ein Teil der Partitionen jeweils durch einen oder mehrere Parameter einer Funktion beschrieben, welche den Verlauf von Pixeln innerhalb eines vorbestimmten Bildbereichs beschreibt, wobei der Verlauf von Pixeln den vorbestimmten Bildbereich in zumindest zwei Partitionen aufteilt. Das erfindungsgemäße Decodierverfahren ist vorzugsweise derart ausgestaltet, dass eine Folge digitalisierter Bilder decodiert werden kann, welche basierend auf einer oder mehreren bevorzugten Varianten des Codierverfahrens codiert wurde. D.h., das Decodierverfahren umfasst auch die Decodierung einer Folge digitalisierter Bilder, welche mit Ausführungsformen der Codierung gemäß den abhängigen Ansprüchen codiert wurde.

Die Erfindung betrifft darüber hinaus ein Verfahren zur Codierung und Decodierung eine Folge digitalisierter Bilder, wobei die Bilder der Folge mit dem oben beschriebenen Codierverfahren codiert werden und die codierten Bilder der Folge mit dem oben beschriebenen Decodierverfahren decodiert werden.

Die Erfindung betrifft ferner eine Vorrichtung zur Codierung einer Folge digitalisierter Bilder aus einer Mehrzahl von Pixeln mit einem Codiermittel zur Codierung eines Signals, welches für die jeweiligen Bilder von deren Bildinhalt abhängt, wobei das Codiermittel umfasst:
ein Rekonstruktionsmittel, mit dem im Rahmen der Codierung eine Rekonstruktion des uncodierten Signals durchgeführt wird und daraus rekonstruierte Bilder abgeleitet werden, welche insbesondere bei der Codierung von nachfolgenden Bilder der Folge verwendet werden;
   - ein Filtermittel, mit dem die rekonstruierten Bilder einer Filterung unterzogen werden, bei der ein jeweiliges rekonstruiertes Bild in Partitionen aufgeteilt wird und für jede Partition ein oder mehrere Filterparameter festgelegt werden, wobei zumindest einige der Partitionen jeweils durch eine oder mehrere Parameter einer Funktion beschrieben werden, welche den Verlauf von Pixeln innerhalb eines vorbestimmten Bildbereichs beschreibt, wobei der Verlauf von Pixeln den vorbestimmten Bildbereich in zumindest zwei Partitionen aufteilt.

Die Erfindung betrifft darüber hinaus eine entsprechende Decodiervorrichtung zur Decodierung einer Folge digitalisierter Bilder, welche mit dem erfindungsgemäßen Codierverfahren codiert wurde. Dabei verarbeitet die Vorrichtung im Betrieb mit einem Decodiermittel ein codiertes Signal, welches für die jeweiligen Bilder von deren Bildinhalt abhängt, wobei das Decodiermittel umfasst:
- ein Rekonstruktionsmittel, mit dem im Rahmen der Decodierung eine Rekonstruktion des uncodierten Signals durchgeführt wird und daraus rekonstruierte Bilder abgeleitet werden, welche insbesondere bei der Decodierung von nachfolgenden Bildern der Folge verwendet werden;
- ein Filtermittel, mit dem die rekonstruierten Bilder einer Filterung unterzogen werden, welche der bei der Codierung verwendeten Filterung entspricht, wobei bei der Filterung ein jeweiliges rekonstruiertes Bild in Partitionen aufgeteilt wird und für jede Partition ein oder mehrere Filterparameter festgelegt werden, wobei zumindest einige der Partitionen jeweils durch einen oder mehrere Parameter einer Funktion beschrieben werden, welche den Verlauf von Pixeln innerhalb eines vorbestimmten Bildbereichs beschreibt, wobei der Verlauf von Pixeln den vorbestimmten Bildbereich in zumindest zwei Partitionen aufteilt.

Die Erfindung betrifft darüber hinaus einen Codec zur Codierung und Decodierung einer Folge digitalisierter Bilder, umfassend eine erfindungsgemäße Codiervorrichtung und eine erfindungsgemäße Decodiervorrichtung.

Ausführungsbeispiele der Erfindung werden nachfolgend anhand der beigefügten Figuren detailliert beschrieben.

Es zeigen:
- Fig. 1: eine schematische Darstellung einer Codierung und Decodierung basierend auf einer Ausführungsform des erfindungsgemäßen Verfahrens;
- Fig. 2: die Wiedergabe eines Bildbereichs, der basierend auf einer adaptiven Loop-Filterung gemäß dem Stand der Technik gefiltert wird;
- Fig. 3: eine Darstellung, welche verschiedene Varianten einer im Rahmen der erfindungsgemäßen Filterung verwendeten Partitionierung von Bildbereichen zeigt;
- Fig. 4: einen Bildbereich, der basierend auf einer Ausführungsform der erfindungsgemäßen Filterung partitioniert ist; und
- Fig. 5: eine schematische Darstellung einer Codiervorrichtung und Decodiervorrichtung zur Durchführung des erfindungsgemäßen Verfahrens.

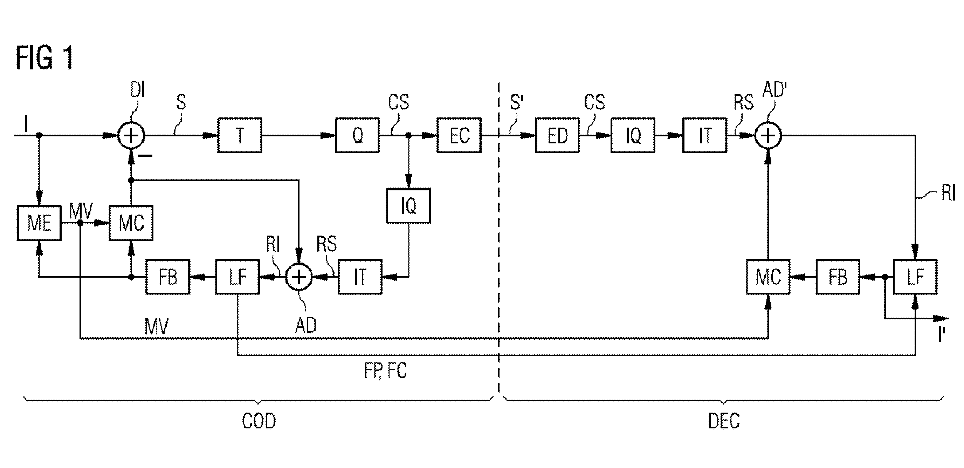

Die nachfolgend beschriebene Ausführungsform des erfindungsgemäßen Verfahrens beruht auf der in Fig. 1 gezeigten Architektur einer hybriden Videocodierung, wobei die gezeigten Komponenten an sich aus dem Stand der Technik bekannt sind. Der Unterschied des erfindungsgemäßen Verfahrens gegenüber dem Stand der Technik besteht in der Durchführung der Filterung basierend auf dem in Fig. 1 dargestellten Loop-Filter LF, wie weiter unten noch näher erläutert wird.

Die Architektur der Fig. 1 zeigt eine Codierung COD für einen Strom von Videobildern I, aus denen mit Hilfe des Differenzierers DI ein Prädiktionsfehlersignal S ermittelt, das einer an sich bekannten Transformation (insbesondere einer DCT-Transformation; DCT = Discrete Cosine Transformation) und anschließend einer ebenfalls bekannten Quantisierung Q unterzogen wird, wodurch ein komprimiertes Prädiktionsfehlersignal CS erhalten wird. Dieses Signal wird einer verlustfreien Entropiecodierung EC unterzogen. Das dadurch erhaltene Signal S' wird anschließend mit einer entsprechenden Decodierung DEC decodiert.

Zur Ermittlung des zu codierenden Prädiktionsfehlersignals S werden entsprechende Videobilder zu vergangenen Zeitpunkten berücksichtigt. Um diese Videobilder zu erhalten, werden bereits codierte Fehlersignale CS einer inversen Quantisierung IQ und einer inversen Transformation IT unterzogen. Der hieraus erhaltene rekonstruierte Prädiktionsfehler RS wird dann über den Addierer AD mit einem bewegungskompensierten Signal kombiniert. Das hieraus resultierende rekonstruierte Bild RI wird einer Filterung LF unterzogen und in einem Speicher FB abgelegt. Im Rahmen der Bewegungskompensation wird eine an sich bekannte Bewegungsschätzung ME mit den ursprünglichen Bilder I durchgeführt, wodurch Bewegungsvektoren MV erhalten werden, welche die Verschiebung von Bildblöcken zwischen dem aktuellen Bild und dem zeitlich vorhergehenden Bild beschreiben. Mittels der Bewegungsvektoren wird im Rahmen der Bewegungskompensation MC aus dem zeitlich vorhergehenden Bild ein aktuelles Bild prädiziert, welches dann dem Differenzierer DI zugeführt wird, der den entsprechenden Prädiktionsfehler S ausgibt. Ferner wird das bewegungskompensierte Bild über den Addierer AD mit dem entsprechend rekonstruierten Prädiktionsfehler RS kombiniert und in Speicher FB abgelegt, wodurch eine Prädiktionsschleife gebildet wird.

Wie bereits oben erwähnt, werden die rekonstruierten Bilder RI vor der Abspeicherung im Speicher FB einer Filterung LF unterzogen. Die Filterung erfolgt innerhalb der Prädiktionsschleife und wird deshalb auch als Loop-Filterung bezeichnet. Es wird dabei ein Wiener-Filter eingesetzt, das an sich aus dem Stand der Technik bekannt ist. Mit diesem Filter wird der mittlere quadratische Fehler zwischen dem aktuellen Bild I und dem rekonstruierten Bild RI minimiert. Als Ergebnis der Filterung erhält man Filterkoeffizienten FC, die als Seiteninformation an den zur Decodierung verwendeten Decoder übertragen werden. Im Rahmen der erfindungsgemäßen Filterung erfolgt die Filterung separat für unterschiedliche Bildbereiche, d.h. die entsprechenden Parameter der Filterung können für die verschiedenen Bildbereiche unterschiedlich festgelegt werden. Diese Filterparameter FP werden als Seiteninformation ebenfalls an den zur Decodierung verwendeten Decoder übertragen. Darüber hinaus werden die über die Bewegungsschätzung ermittelten Bewegungsvektoren MV an den Decoder ermittelt.

Im Rahmen der Decodierung DEC wird das codierte Signal S' zunächst einer Entropiedecodierung unterzogen, wodurch der codierte Prädiktionsfehler CS erhalten wird. Dieser wird einer inversen Quantisierung IQ und einer inversen Transformation IT unterzogen. Das sich hieraus ergebende rekonstruierte Fehlersignal RS wird über den Addierer AD' mit einem entsprechenden rekonstruierten Bild aus dem Speicher FB kombiniert, welches einer Filterung LF und einer Bewegungskompensation MC unterzogen wurde. Hierdurch wird die decodierte Folge von Bildern I' erhalten, welche nach der Filterung LF abgegriffen wird. Im Rahmen der Rekonstruktion der Bilder im Speicher FB werden die übermittelten Bewegungsvektoren MV sowie die Filterparameter FP und Filterkoeffizienten FC berücksichtigt. Es erfolgt basierend auf den Filterparametern und Filterkoeffizienten eine analoge Filterung wie bei der Codierung sowie eine analoge Bewegungskompensation mittels der übermittelten Bewegungsvektoren MV.

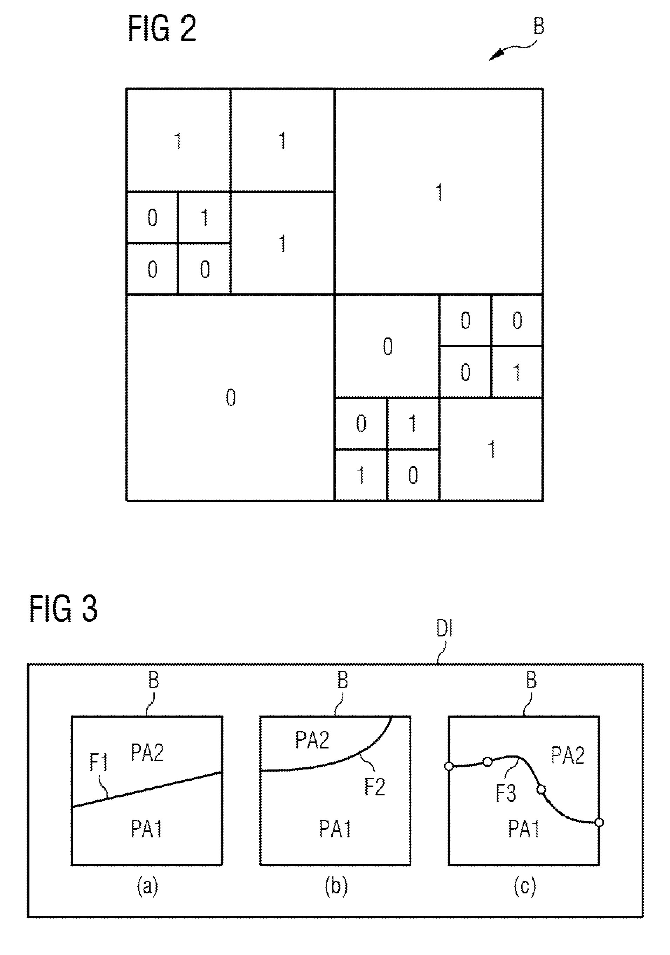

Bevor auf eine Ausführungsform der erfindungsgemäßen Loop-Filterung eingegangen wird, erfolgt zunächst die Beschreibung eines an sich bekannten adaptiven Loop-Filters, der ggf. mit der erfindungsgemäßen Filterung kombiniert werden kann. Eine Beschreibung dieses adaptiven Loop-Filters findet sich in der Druckschrift [1]. Gemäß dieses Filters wird eine Codiereinheit in der Form eines entsprechenden Bildblocks in kleinere quadratische Bildbereiche basierend auf einer hierarchischen Block-Partitionierung eingeteilt. Dies ist in Fig. 2 wiedergegeben. Der dargestellte Bildblock B wird zunächst in vier kleinere Bildblöcke unterteilt, und anschließend werden die einzelnen Bildblöcke ggf. wiederum in vier kleinere Bildblöcke und diese ggf. wiederum in kleinere Bildblöcke usw. unterteilt. Auf diese Weise wird eine hierarchische Unterteilung in kleinere Bildblöcke erreicht, wobei in jeder Hierarchieebene entschieden wird, ob eine Einteilung in kleinere Blöcke erfolgen soll oder der Block als Ganzes erhalten bleiben soll. Gemäß dieser Unterteilung werden somit aus dem gerade verarbeiteten Block vier kleinere Sub-Blöcke erzeugt, welche in horizontaler und vertikaler Richtung halb so groß wie der ursprüngliche Block sind. Für jeden Knoten dieses Quad-Trees (d.h. denjenigen Sub-Block, für den keine weitere Unterteilung erfolgt) wird dann die binäre Information hinterlegt, ob für den Sub-Block eine Filterung erfolgen soll oder nicht. Gemäß Fig. 1 ist für alle Blöcke, welche mit 1 bezeichnet sind, eine Filterung vorgesehen, wohingegen die anderen, mit Null bezeichneten Blöcke nicht gefiltert werden.

Die erfindungsgemäße Filterung geht auch von einer Unterteilung eines entsprechenden Bildblocks in kleinere Bildbereiche aus, jedoch erfolgt die Partitionierung nicht bzw. nur optional basierend auf hierarchisch immer kleiner werdenden Blöcken. Stattdessen wird eine parametrische Partitionierung verwendet, welche für verschiedene Varianten der Erfindung in Fig. 3 angedeutet ist.

Fig. 3 zeigt ein Diagramm DI, welches Varianten (a), (b) und (c) einer erfindungsgemäßen Partitionierung für einen Bildblock B verdeutlicht. Erfindungswesentlich ist dabei, dass zur Partitionierung ein oder mehrere Parameter einer Funktion berücksichtigt werden, welche den Verlauf von Pixeln innerhalb des entsprechend zu partitionierenden Bildblocks B beschreibt. In der Variante (a) ist dabei eine Partitionierung basierend auf einer Geraden gezeigt, welche schräg durch den entsprechenden Bildblock B verläuft und diesen in die zwei Partitionen PA1 und PA2 einteilt. Die Gerade wird dabei insbesondere durch deren Steigung und Versatz beschrieben. Für jede Partition wird analog zum Verfahren gemäß Fig. 2 festgelegt, ob eine Filterung erfolgen soll oder nicht. Die Lage der Geraden kann dabei beliebig sein. Insbesondere ist es möglich, dass die Gerade schräg durch den Bildblock verläuft, was auch in der Variante (a) angedeutet ist. Entsprechende Kriterien, welche die Parameter der Geraden und damit die Aufteilung in Partitionen festlegen, können beliebig definiert werden. Vorzugsweise werden die Parameter der Geraden mit geeigneten Heuristiken bzw. Rekursionsverfahren derart festgelegt, dass der sich durch die Partitionierung ergebende quadratische Fehler minimiert wird.

Anstatt einer Partitionierung basierend auf einer Geradenfunktion können auch andere Funktionen zur Beschreibung der Partitionierung verwendet werden. In Fig. 3 ist dabei in der Variante (b) eine Partitionierung basierend auf einem geeigneten Polynom wiedergegeben. Ferner kann die Partitionierung basierend auf einer stückweisen Zusammensetzung von mehreren Polynomen in der Form eines Splines erfolgen, was in Variante (c) angedeutet ist. Gegebenenfalls können auch weitere beliebige Funktionen zur Unterteilung verwendet werden.

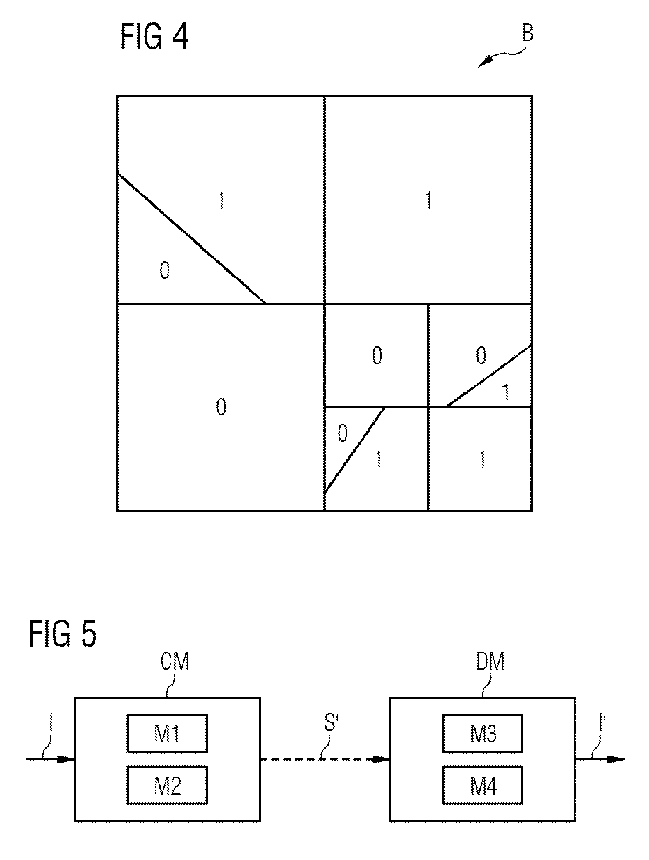

Fig. 4 zeigt eine Variante der erfindungsgemäßen Partitionierung, welche mit der hierarchischen Blockunterteilung gemäß Fig. 2 kombiniert ist. Dabei erfolgt zunächst in geeigneter Weise die Unterteilung des Bildblocks B in mehrere Sub-Blöcke. Anschließend wird für zumindest einige der Sub-Blöcke in dem Quad-Tree, welche nicht weiter im Rahmen der hierarchischen Unterteilung verkleinert werden, eine Unterteilung basierend auf der erfindungsgemäßen Partitionierung über eine parametrische Beschreibung eines Pixelverlaufs in der Form einer Geraden vorgenommen. In Fig. 4 wird die erfindungsgemäße Partitionierung auf den linken oberen Block sowie zwei diagonal gegenüber liegende Blöcke innerhalb des rechten unteren Blocks angewendet. Durch die Ziffer 1 wird wiederum die Durchführung einer Filterung in dem entsprechenden Bildbereich angedeutet, wohingegen die Ziffer 0 signalisiert, dass in dem Bildbereich keine Filterung erfolgt.

Die in Fig. 4 angedeutete Filterung kann ggf. auch rein durch eine Quad-Tree-Partitionierung erreicht werden, indem so lange in kleinere Blöcke unterteilt wird, bis hierdurch eine entsprechende Gerade als Pixelverlauf modelliert wird. Hierzu wird jedoch eine wesentlich größere Anzahl an Partitionen benötigt, als dies bei der Unterteilung mittels einer Geradenfunktion der Fall ist. Demzufolge führt die Verwendung der erfindungsgemäßen Filterung zu einer wesentlich geringeren Datenrate des komprimierten Bitstroms als eine reine Quad-Tree-basierte Filterung.

In den im Vorangegangenen erläuterten Ausführungsformen des erfindungsgemäßen Verfahrens wurde im Rahmen der Filterung für die entsprechenden Partitionen festgelegt, ob eine Filterung in der jeweiligen Partition erfolgen soll oder nicht. Gegebenenfalls besteht auch die Möglichkeit, die Filterparameter differenzierter festzulegen. Bspw. können für verschieden Partitionen unterschiedliche Filter oder unterschiedliche Filter-Typen, z.B. separable Filter, nichtseparable Filter, Diamant-Filter und dergleichen, festgelegt werden. In weiteren Varianten besteht ferner die Möglichkeit, dass die Filterung nicht im Rahmen eines Loop-Filters innerhalb der Prädiktionsschleife, sondern durch ein entsprechendes Filter außerhalb der Prädiktionsschleife erfolgt. Ebenso kann das Filter in Fig. 1 an einer anderen Position innerhalb der Prädiktionsschleife angeordnet sein, bspw. kann die Filterung nach der Bewegungskompensation MC erfolgen.

Die Signalisierung entsprechender Parameter, mit denen die Funktion zur Partitionierung eines Blocks beschrieben wird, kann auf verschiedene Weise erfolgen. Beispielsweise können als Parameter der Partitionierungstyp (linear, polynomial, Spline und dgl.) sowie entsprechende Parameter bzw. Koeffizienten des verwendeten Partitionierungstyps, wie Steigung, vorbekannte Punkte der Funktion und dgl., angegeben werden. Die Parameter können dabei explizit im komprimierten Bitstrom als Filterparameter FP signalisiert werden, wie dies auch in Fig. 1 wiedergegeben ist. Ebenso besteht die Möglichkeit, dass die Parameter aus anderen Codierparametern abgeleitet werden. Beispielsweise kann bei der Bewegungsschätzung das in der Druckschrift [2] beschriebene Verfahren verwendet werden, bei dem genauso wie im erfindungsgemäßen Verfahren eine Partitionierung von Bildblöcken über Parameter einer Geraden erfolgt, wobei die derart gebildeten Partitionen zur Bewegungsschätzung verwendet werden. Die entsprechenden Parameter der Bewegungsschätzung können zumindest teilweise auch zur Filterung verwendet werden, so dass über die Codierparameter der Bewegungsschätzung auch entsprechende Filterparameter festgelegt werden. Entsprechende Filterparameter können sich ggf. auch durch die Spezifikation des zur Codierung verwendeten Profils ergeben. Beispielsweise kann für ein vorbestimmtes Profil festgelegt sein, dass nur eine lineare Partitionierung zugelassen wird.

Das im Vorangegangenen beschriebene erfindungsgemäße Verfahren weist eine Reihe von Vorteilen auf. Insbesondere kann das verwendete Filter genauer eingestellt und kontrolliert werden, was insbesondere für komplexe Szenen mit mehreren Objekten im Bild vorteilhaft ist. Ferner kann Datenrate im Vergleich zu einer Repräsentation des Filters über hierarchische Blockunterteilung eingespart werden, wie bereits oben erwähnt wurde. Darüber hinaus steht ferner die Möglichkeit, die erfindungsgemäße Filterung in geeigneter Weise mit einer hierarchischen Blockunterteilung zu kombinieren, was zu einem sehr flexiblen Partitionierungs-Schema für das Filter führt.

Fig. 5 zeigt in schematischer Darstellung eine konkrete Ausgestaltung eines Systems aus einer erfindungsgemäßen Codiervorrichtung und einer erfindungsgemäßen Decodiervorrichtung. Die einzelnen Komponenten des Systems können dabei in der Form von Hardware bzw. Software bzw. einer Kombination aus Hardware und Software realisiert sein. Die Codiervorrichtung umfasst ein Codiermittel CM, welches den zu codierenden Strom aus digitalisierten Bildern I empfängt. Innerhalb des Codiermittels erfolgt dabei eine Codierung des Prädiktionsfehlers gemäß Fig. 1, d.h. es sind u.a. entsprechende Einheiten zur Transformation, Quantisierung, inversen Transformation, inversen

Quantisierung und Entropiecodierung vorgesehen. Im Besonderen beinhaltet das Codiermittel CM dabei ein erstes Mittel M1 in der Form eines Rekonstruktionsmittels, mit dem im Rahmen der Codierung eine Rekonstruktion des uncodierten Prädiktionsfehlers RS durchgeführt wird und basierend darauf rekonstruierte Bilder RI abgeleitet werden. Darüber hinaus ist ein zweites Mittel M2 in der Form eines Filtermittels vorgesehen, mit dem die rekonstruierten Bilder RI einer erfindungsgemäßen Filterung unterzogen werden, bei der die erfindungsgemäße Partitionierung der Bilder in Teilbereiche erfolgt.

Das im Rahmen der Codierung erhaltene codierte Signal S' in der Form des codierten Prädiktionsfehlers wird zu einer entsprechenden Decodiereinheit mit einem Decodiermittel DM übertragen, welches in Analogie zu Fig. 1 u.a. entsprechende Komponenten zur Entropiedecodierung, inversen Quantisierung, inversen Transformation und Bewegungsschätzung enthält. Im Besonderen ist dabei ein drittes Mittel M3 in der Form eines Rekonstruktionsmittels vorgesehen, mit dem im Rahmen der Decodierung eine Rekonstruktion des uncodierten Signals RS durchgeführt wird und daraus die rekonstruierte Bilder RI abgeleitet werden. Ferner ist ein viertes Mittel M4 in der Form eines Filtermittels M4 vorgesehen, mit dem die rekonstruierten Bilder einer Filterung unterzogen werden, welche der bei der Codierung verwendeten Filterung entspricht und die Bildblöcke in geeignete Partitionen unterteilt. Nach Abschluss der Decodierung wird der entsprechend decodierte Bildstrom aus einer Vielzahl von decodierten Bildern I' ausgegeben.

### Literaturverzeichnis

[1] T. Chujoh, N. Wada and G. Yasuda, "Quadtree-based Adaptive Loop Filter," ITU-T SG 16, document C181, Geneva, January 2009.

[2] P. Chen, W. Chien, R. Panchal, M. Karczewicz, "Geometry motion partition" JCT-VC of ISO/IEC SG29 WG11 (MPEG) and ITU-T SG16 Q.6(VCEG), document JCTVC-B049, Geneva, Switzerland, July 2010.

## Patentansprüche

1. Verfahren zur Codierung einer Folge digitalisierter Bilder (I) aus einer Vielzahl von Pixeln, bei dem für die jeweiligen Bilder (I) ein von deren Bildinhalt abhängiges Signal (S) codiert wird, wobei im Rahmen der Codierung eine Rekonstruktion des uncodierten Signals durchgeführt wird und daraus rekonstruierte Bilder (RI) abgeleitet werden, wobei die rekonstruierten Bilder (RI) einer Filterung (LF) unterzogen werden, bei der ein jeweiliges rekonstruiertes Bild (RI) in Partitionen (PA1, PA2) aufgeteilt wird und für jede Partition (PA1, PA2) ein oder mehrere Filterparameter (FP) festgelegt werden, **dadurch gekennzeichnet, dass** zumindest einige der Partitionen (PI1, PI2) jeweils durch einen oder mehrere Parameter einer Funktion (F1, F2, F3) beschrieben werden, welche den Verlauf von Pixeln innerhalb eines vorbestimmten Bildbereichs (B) beschreibt, wobei der Verlauf von Pixeln den vorbestimmten Bildbereich (B) in zumindest zwei Partitionen (PA1, PA2) aufteilt.

2. Verfahren nach Anspruch 1, **dadurch gekennzeichnet, dass** als Signal (S) ein Prädiktionsfehler zwischen dem aktuellen zu codierenden Bild (I) und einem oder mehreren rekonstruierten und prädizierten Bildern (RI) codiert wird, wobei der Prädiktionsfehler mittels einer Prädiktionsschleife aus einem oder mehreren vergangenen rekonstruierten Bildern (RI) ermittelt wird, welche einer Bewegungskompensation (MC) unter Verwendung von über eine Bewegungsschätzung (ME) ermittelten Bewegungsvektoren (MV) unterzogen werden, wobei innerhalb der Prädiktionsschleife das oder die rekonstruierten Bilder (RI) nach der Bewegungskompensation zur Rekonstruktion von einem oder mehreren nachfolgenden Bildern (RI) verwendet werden.

3. Verfahren nach Anspruch 2, **dadurch gekennzeichnet, dass** die zur Ermittlung des Prädiktionsfehlers verwendeten rekonstruierten Bilder (RI) innerhalb der Prädiktionsschleife neben der Bewegungskompensation (MC) der Filterung (LF) unterzogen werden.

4. Verfahren nach Anspruch 2 oder 3, **dadurch gekennzeichnet, dass** die zur Ermittlung des Prädiktionsfehlers (S) verwendeten rekonstruierten Bilder (RI) ungefiltert sind und die Filterung der rekonstruierten Bilder (RI) außerhalb der Prädiktionsschleife stattfindet.

5. Verfahren nach einem der vorhergehenden Ansprüche, **dadurch gekennzeichnet, dass** das codierte Signal (CS) durch eine Transformation (T) und eine Quantisierung (Q) erzeugt wird und zur Rekonstruktion des uncodierten Signals (RS) eine entsprechende inverse Quantisierung (IQ) und inverse Transformation (IT) auf das codierte Signal (CS) angewendet wird, wobei das codierte Signal (CS) nach der Quantisierung (Q) und Transformation (T) vorzugsweise einer weiteren Entropiecodierung unterzogen wird.

6. Verfahren nach einem der vorhergehenden Ansprüche, **dadurch gekennzeichnet, dass** die Filterung (LF) der rekonstruierten Bilder (RI) basierend auf einem Wiener-Filter und/oder Deblocking-Filter erfolgt.

7. Verfahren nach einem der vorhergehenden Ansprüche, **dadurch gekennzeichnet, dass** die jeweiligen vorbestimmten Bildbereiche (B), die durch den Verlauf von Pixeln in zumindest zwei Partitionen (PA1, PA2) aufgeteilt werden, rechteckige Bildbereiche und insbesondere quadratische Bildbereiche in der Form von Bildblöcken ist.

8. Verfahren nach einem der vorhergehenden Ansprüche, **dadurch gekennzeichnet, dass** die Funktion (F1, F2, F3), welche den Verlauf von Pixeln innerhalb des vorbestimmten Bildbereichs (B) beschreibt, eine Gerade ist.

9. Verfahren nach Anspruch 7 und 8, **dadurch gekennzeichnet, dass** die Gerade schräg im rechteckigen Bildbereich (B) verläuft.

10. Verfahren nach einem der vorhergegangenen Ansprüche, **dadurch gekennzeichnet, dass** die Funktion (F1, F2, F3), welche den Verlauf von Pixeln innerhalb des vorbestimmten Bildbereichs (B) beschreibt, ein Polynom und/oder ein Spline ist.

11. Verfahren nach einem der vorhergehenden Ansprüche, **dadurch gekennzeichnet, dass** der oder die Filterparameter (FP) angeben, ob eine Filterung in der jeweiligen Partition (PA1, PA2) erfolgt, und/oder welches Art von Filter in der jeweiligen Partition (PA1, PA2)) verwendet wird.

12. Verfahren nach einem der vorhergehenden Ansprüche, **dadurch gekennzeichnet, dass** die jeweiligen vorbestimmten Bildbereiche (B), welche in zumindest zwei Partitionen (PA1, PA2) aufgeteilt werden, über eine hierarchische Unterteilung des entsprechenden Bilds (I) in immer kleinere Bildbereiche (B) erzeugt werden.

13. Verfahren nach einem der vorhergehenden Ansprüche, **dadurch gekennzeichnet, dass** der oder die Filterparameter (FP) für die jeweiligen Partitionen (PA1, PA2) und/oder der oder die Parameter der Funktion (F1, F2, F3), welche den Verlauf von Pixeln innerhalb der jeweiligen vorbestimmten Bildbereiche (B) beschreibt, innerhalb der codierten Bildfolge enthalten sind und/oder aus einem oder mehreren vorgegebenen Codierparametern abgeleitet werden können.

14. Verfahren nach einem der vorhergehenden Ansprüche, wenn abhängig von Anspruch 2, **dadurch gekennzeichnet, dass** Partitionen (PA1, PA2), welche im Rahmen der Bewegungsschätzung (ME) definiert werden und über jeweilige Bewegungsvektoren (MV) verschobene Bildbereiche darstellen, zumindest zum Teil als Partitionen (PA1, PA2) für die Filterung (LF) verwendet werden.

15. Verfahren zur Decodierung einer Folge digitalisierter Bilder, welche mit einem Verfahren nach einem der vorhergehenden Ansprüche codiert wurde, so dass für die jeweiligen Bilder (I) ein von deren Bildinhalt abhängiges codiertes Signal (S) erhalten wird, wobei im Rahmen der Decodierung eine Rekonstruktion des uncodierten Signals (RS) durchgeführt wird und daraus rekonstruierte Bilder abgeleitet werden, wobei die rekonstruierten Bilder (RI) einer Filterung (LF) unterzogen werden, welche der bei der Codierung verwendeten Filterung entspricht, wobei bei der Filterung ein jeweiliges rekonstruiertes Bild (RI) in Partitionen (PA1, PA2) aufgeteilt wird und für jede Partition (PA1, PA2) ein oder mehrere Filterparameter (FP) festgelegt werden, **dadurch gekennzeichnet, dass** zumindest einige der Partitionen (PI1, PI2) jeweils durch einen oder mehrere Parameter einer Funktion (F1, F2, F3) beschrieben werden, welche den Verlauf von Pixeln innerhalb eines vorbestimmten Bildbereichs (B) beschreibt, wobei der Verlauf von Pixeln den vorbestimmten Bildbereich in zumindest zwei Partitionen (PA1, PA2) aufteilt.

16. Verfahren zur Codierung und Decodierung einer Folge digitalisierter Bilder (I), wobei
- die Bilder (I) der Folge mit einem Verfahren nach einem der Ansprüche 1 bis 14 codiert werden;
- die codierte Bilder mit einem Verfahren nach Anspruch 15 decodiert werden.

17. Vorrichtung zur Codierung einer Folge digitalisierter Bilder (I) aus einer Vielzahl von Pixeln mit einem Codiermittel (CM) zur Codierung eines Signals (S), welches für die jeweiligen Bilder von deren Bildinhalt abhängt, wobei das Codiermittel umfasst:
- ein Rekonstruktionsmittel (M1), mit dem im Rahmen der Codierung eine Rekonstruktion des uncodierten Signals (RS) durchgeführt wird und daraus rekonstruierte Bilder (RI) abgeleitet werden;
- ein Filtermittel (M2), mit dem die rekonstruierten Bilder (RI) einer Filterung (LF) unterzogen werden, bei der ein jeweiliges rekonstruiertes Bild (RI) in Partitionen (PA1, PA2) aufgeteilt wird und für jede Partition (PA1, PA2) ein oder mehrere Filterparameter (FP) festgelegt werden;
**dadurch gekennzeichnet, dass** zumindest einige der Partitionen (PI1, PI2) jeweils durch einen oder mehrere Parameter einer Funktion (F1, F2, F3) beschrieben werden, welche den Verlauf von Pixeln innerhalb eines vorbestimmten Bildbereichs (B) beschreibt, wobei der Verlauf von Pixeln den vorbestimmten Bildbereich in zumindest zwei Partitionen (PA1, PA2) aufteilt.

18. Vorrichtung nach Anspruch 17, **dadurch gekennzeichnet, dass** die Vorrichtung ein oder mehrere weitere Mittel zur Durchführung eines Verfahrens nach einem der Ansprüche 2 bis 14 umfasst.

19. Vorrichtung zur Decodierung einer Folge digitalisierter Bilder, welche mit einem Verfahren nach einem der Ansprüche 1 bis 14 codiert wurde, wobei die Vorrichtung im Betrieb mit einem Decodiermittel (DM) ein codiertes Signal (S') verarbeitet, welches für die jeweiligen Bilder von deren Bildinhalt abhängt, wobei das Decodiermittel (DM) umfasst:
- ein Rekonstruktionsmittel (M3), mit dem im Rahmen der Decodierung eine Rekonstruktion des uncodierten Signals (RS) durchgeführt wird und daraus rekonstruierte Bilder abgeleitet werden;
- ein Filtermittel (M4), mit dem die rekonstruierten Bilder (RI) einer Filterung (LF) unterzogen werden, welche der bei der Codierung verwendeten Filterung entspricht, wobei bei der Filterung ein jeweiliges rekonstruiertes Bild (RI) in Partitionen (PA1, PA2) aufgeteilt wird und für jede Partition (PA1, PA2) ein oder mehrere Filterparameter (FP) festgelegt werden, **dadurch gekennzeichnet, dass** zumindest einige der Partitionen (PI1, PI2) jeweils durch einen oder mehrere Parameter einer Funktion (F1, F2, F3) beschrieben werden, welche den Verlauf von Pixeln innerhalb eines vorbestimmten Bildbereichs (B) beschreibt, wobei der Verlauf von Pixeln den vorbestimmten Bildbereich in zumindest zwei Partitionen (PA1, PA2) aufteilt.

20. Codec zur Codierung und Decodierung einer Folge digitalisierter Bilder (I), umfassend eine Codiervorrichtung nach Anspruch 17 oder 18 und eine Decodiervorrichtung nach Anspruch 19.
